(19) Europäisches Patentamt
European Patent Office
Office européen des brevets

(11) **EP 2 292 454 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(51) Int Cl.:
***B60H 1/00*** *(2006.01)*

(21) Anmeldenummer: **10174871.3**

(22) Anmeldetag: **01.09.2010**

(54) **Betriebsverfahren für ein Heizsystem eines elektrisch antreibbaren Fahrzeugs**

Method for operating a heating system of an electric vehicle

Procédé de fonctionnement pour un système de chauffage d'un véhicule électrique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **02.09.2009 DE 102009039681**

(43) Veröffentlichungstag der Anmeldung:
**09.03.2011 Patentblatt 2011/10**

(73) Patentinhaber: **Behr GmbH & Co. KG**
**70469 Stuttgart (DE)**

(72) Erfinder:
• **Grünwald, Jürgen**
**71638 Ludwigsburg (DE)**
• **Neumeister, Dirk**
**70374 Stuttgart (DE)**

• **Heckenberger, Thomas**
**70771 Leinfelden-Echterdingen (DE)**

(74) Vertreter: **Grauel, Andreas et al**
**Grauel IP**
**Patentanwaltskanzlei**
**Presselstrasse 10**
**70191 Stuttgart (DE)**

(56) Entgegenhaltungen:
**EP-A2- 1 072 453        WO-A1-2008/010675**
**DE-A1- 10 218 343        DE-C1- 19 850 829**

• **BURK R ET AL: "INTEGRALES KLIMASYSTEM FUER ELEKTROAUTOMOBILE", ATZ AUTOMOBILTECHNISCHE ZEITSCHRIFT, VIEWEG PUBLISHING, WIESBADEN, DE, Bd. 94, Nr. 11, 1. November 1992 (1992-11-01), Seiten 582-588, XP000321845, ISSN: 0001-2785**

## Beschreibung

Die Erfindung betrifft Betriebsverfahren für ein Heizsystem für ein elektrisch antreibbares Fahrzeug nach dem Oberbegriff des Anspruchs 1 wie es in der DE 19850829 C1 offenbart wird..

Aus der Entwicklung von elektrisch antreibbaren Fahrzeugen ist die Problematik bekannt, dass aufgrund der im Vergleich zum Antrieb mit Verbrennungsmotoren geringen Abwärmeleistungen eine Heizung eines Passagierbereichs problematisch ist. Ein bekannter Ansatz besteht darin, die zur Verfügung stehende Energie aus einem elektrischen Energiespeicher zum Betrieb einer Widerstandsheizung wie etwa einem PTC-Heizglied (PTC = Positive Temperature Coefficient) zu verwenden.

Es ist die Aufgabe der Erfindung, ein Betriebsverfahren für ein Heizsystem für ein elektrisch antreibbares Fahrzeug anzugeben, durch das eine gespeicherte elektrische Energie möglichst sparsam verwendet wird.

Diese Aufgabe wird für ein eingangs genanntes Heizsystem erfindungsgemäß mit den kennzeichnenden Merkmalen des Anspruchs 1 gelöst. Durch die Koppelung des Kühlkreises mit einer Wärmepumpe kann die elektrische Energie zur Heizung mit einem Wirkungsgrad (COP, Coefficient Of Performance) von >1 betrieben werden, wobei auch bei niedrigen Kühlkreislauftemperaturen eine ausreichende Beheizung des Passagierbereichs möglich ist.

Unter einem elektrisch antreibbaren Fahrzeug im Sinne der Erfindung ist grundsätzlich jedes Fahrzeug zu verstehen, dass zumindest zeitweise nur elektrisch, also ohne einen ergänzend laufenden Verbrennungsmotor, angetrieben wird. Insbesondere sind die reine Elektrofahrzeuge und Vollhybridfahrzeuge. Besonders für reine Elektrofahrzeuge ist der Einfluss einer Heizung auf die Reichweite des Fahrzeugs bedeutsam. Eine Antriebskomponente im Sinne der Erfindung kann jede Abwärme erzeugende Komponente des Fahrzeugantriebs sein, wie etwa ein Elektromotor oder eine Leistungselektronik. Auch eine an den Kühlkreislauf angebundene Bremse ist hierunter zu verstehen.

Ein Wärmepumpenglied im Sinne der Erfindung ist als Peltier-Element ausgebildet. Unter einem Peltier-Element im Sinne der Erfindung ist jedes Wärmepumpenglied zu verstehen, das den thermoelektrischen Effekt zum Pumpen von Wärme nutzt.

In bevorzugter Ausführungsform ist das elektrische Heizglied als PTC-Heizelement ausgebildet, wodurch eine betriebssichere, kostengünstige und leistungsstarke Zuheizung zur Verfügung steht.

Das Heizglied kann in möglicher Detailgestaltung je nach Anforderungen unmittelbar in einem Luftstrom für den Passagierbereich angeordnet sein oder in dem Kühlkreislauf zur Erwärmung des Kühlmittels. Grundsätzlich kann sowohl ein Heizglied in dem Luftstrom als auch in dem Kühlkreislauf vorgesehen sein, was aber bei aus Kostengründen bevorzugten Ausführungsformen vermieden wird. Es versteht sich, dass das Heizglied mehrere PTC-Elemente umfassen kann und/oder mehrere Heizglieder vorliegen können.

Alternativ ist ein weiterer Kühlkreislauf, insbesondere zur Kühlung des Energiespeichers, über ein weiteres Wärmepumpenglied thermisch an den Kühlkreislauf angebunden. Dies ist zumindest dann vorteilhaft, wenn die am Energiespeicher, etwa einer Lithium-Ionen-Batterie zu etablierende Temperatur unterhalb der Kühlkreislauftemperatur liegt. Eine typische Betriebstemperatur des Kühlkreislaufs liegt bei etwa 60 °C, wogegen die Temperatur eines Kühlkreises für eine Lithium-Ionen-Batterie im Bereich 10 °C bis 30 °C liegen sollte, um eine optimale Lebenserwartung der Batterie sicherzustellen.

Die Aufgabe der Erfindung wird durch ein Betriebsverfahren mit den Merkmalen des Anspruchs 1 gelöst. Durch die Bestimmung und Überwachung der Temperaturen TL, TK und TWC kann die zum Heizen des Fahrgastbereichs aus dem Energiespeicher benötigte Energiemenge minimiert werden. Insbesondere erfolgt diese Optimierung unter Berücksichtigung der Temperaturdifferenz $\Delta T$ = TWC - TK zwischen der kalten Seite des Wärmepumpenglieds TWC und der des Kühlkreislaufs TK. Eine Optimierung von $\Delta T$ ist besonders bei Ausbildung des Wärmepumpenglieds als Peltier-Element wichtig, da die Betriebsparameter von Peltier-Elementen zur Optimierung ihres Wirkungsgrads besonders kritisch sind. Unter der Bestimmung der Temperaturen im Sinne der Erfindung ist nicht nur eine direkte Messung der Temperaturen zu verstehen, sondern auch eine Ermittlung durch Messung einer oder mehrerer anderer Parameter, mit denen die zu bestimmende Temperatur eindeutig korreliert ist.

Erfindungsgemäß umfasst das Verfahren folgende Schritte:

Bestimmen eines Erwartungswertes für eine Nutzungsdauer des Fahrzeugs zu Beginn einer Nutzung, und

Betrieb des als Peltier-Element ausgebildeten Wärmepumpenglieds in Abhängigkeit vom Erreichen einer vorbestimmten Kühlkreistemperatur TKE, wobei TKE in Abhängigkeit von dem Erwartungswert der Nutzungsdauer gewählt wird, und insbesondere monoton mit dem Erwartungswert ansteigt. Hierdurch wird der Energieverbrauch besonders effektiv optimiert, da das Betriebsverfahren je nach anstehenden Aufgaben des Fahrzeugs angepasst wird.

In bevorzugter Detailgestaltung erfolgt eine Anpassung dabei durch den Schritt: Erhöhen oder Beibehalten einer Pumpleistung des Wärmepumpenglieds, falls eine zeitliche Änderung der Temperatur TK des Kühlkreislaufs größer Null ist. Hierdurch wird vermieden, dass die Temperatur des Kühlkreislaufs durch ein Pumpen von Wärme abgesenkt wird.

Weiterhin bevorzugt umfasst das Verfahren den Schritt: Ermitteln einer Grenzleistung des Peltier-Elements aus dem zeitlichen Verhalten der Temperaturdifferenz ∆T = TWC - TK. Die Grenzleistung bzw. maximale Pumpleistung ist dann gegeben, wenn die Temperaturdifferenz durch eine Erhöhung des elektrischen Stroms durch das Peltier-Element nicht mehr erhöht werden kann. Dieser Zustand kann je nach Betriebsmodus als geeignete Grenzbedingung für eine Erhöhung des elektrischen Stroms durch das Peltier-Element dienen. Dies kann zumindest dann sinnvoll sein, wenn das Temperaturniveau des Kühlkreislaufs ausreichend hoch ist und/oder eine erwartete Fahrzeit eine maximale Wärmeleistung aus dem Kühlkreislauf erlaubt.

Allgemein bevorzugt ist es vorgesehen, dass der Schritt eines zusätzlichen Heizens durch das Heizglied erfolgt, falls die Temperatur TL einen vorgegebenen Wert durch Schritt d, nicht erreicht. Dies bedeutet, dass im Interesse einer ausreichenden Beheizung des Fahrgastraums eine Zusatzheizung mit COP = 1 (reine Widerstandsheizung) erfolgen muss, da eine reine Wärmepumpenheizung mit COP > 1 nicht ausreichend ist.

Bei einem besonders bevorzugten Betriebsverfahren ist der Schritt vorgesehen: Aufheizen eines Wärmespeichers, insbesondere eines Fahrzeuginnenraums, des Kühlkreises, des Energiespeichers und/oder der Antriebskomponente, während eines stationären Ladevorgangs des Energiespeichers. Hierdurch kann während der Fahrt eine teilweise Heizung des Fahrgastraums durch gespeicherte Wärme erfolgen bzw. die Wärmekapazitäten von Kühlkreislauf, Fahrzeuginnenraum, Energiespeicher und/oder Antriebskomponente müssen nicht durch wertvolle elektrische Energie aus dem Energiespeicher gefüllt werden. Unter dem Aufheizen des Energiespeichers ist auch die Heizung eines gegebenenfalls mit dem Energiespeichers verbundenen, eigenen Kühlkreislaufs zu verstehen. Die Aufheizung des Energiespeichers im Zuge eines stationären Ladevorgangs ist besonders günstig, da der Energiespeicher aufgrund seiner hohen Masse von bis zu mehreren hundert Kilogramm eine große Wärmekapazität darstellt Auch bei relativ niedrigen Betriebstemperaturen, wie sie zum Beispiel Lithium-Ionen-Batterien erfordern, enthält der Energiespeicher daher eine große, durch ein erfindungsgemäßes Heizsystem nutzbare Wärmemenge. Der Transport dieser Wärme von dem Energiespeicher in den Passagierbereich kann zum Beispiel durch eine thermische Anbindung eines Kühlkreislaufs des Energiespeichers an den Kühlkreislauf erfolgen, zum Beispiel mittels eines Wärmepumpenglieds, oder auch auf andere Weise. Allgemein bevorzugt erfolgt der Transport aber mittels eines Wärmepumpenglieds, da das Temperaturniveau zumindest im Fall von aktuellen Lithium-Ionen-Batterien nur wenig oberhalb oder sogar unterhalb einer Temperatur des Passagierbereichs liegen sollte.

Allgemein lässt sich das Auffinden der vorbestimmten Kühlkreistemperatur mathematisch als Optimierungsproblem der Variationsrechnung beschreiben:

$$\frac{\delta}{\delta TK(t)}\left[\int_{t=0}^{t_B} P_{el,PTC}(t)\cdot dt + \int_{t=0}^{t_B} P_{el,TE}(t)\cdot dt\right] = 0$$

Dabei ist $t_B$ die Betriebsdauer bzw, deren Erwartungswert, $P_{el,PTC}$ ist die zeitabhängige Leistung des Heizglieds (COP=1), und $P_{el,TE}$ ist die elektrische Leistungsaufnahme des Peltier-Elements (COP>=1). Grundsätzlich können bei der Lösung weitere Randbedingungen bei der Auffindung des optimalen Weges berücksichtigt werden.

Besonders bevorzugt wird bis zum Erreichen der vorbestimmten Temperatur TKE eine instationäre Aufheizphase des Kühlkreislaufs betrieben, wobei mit dem Erreichen von TKE eine im Wesentlichen stationäre Phase mit konstanter Kühlmitteltemperatur TK = TKE und entsprechender Wärmeentnahme durch das Wärmepumpenglied erfolgt. Dies entspricht einer einfachen Optimierung des vorgenannten Problems unter der vereinfachten Formulierung:

$$\frac{d}{dTKE}\left[\int_{t=0}^{t_B} P_{el,PTC}(t)\cdot dt + \int_{t=0}^{t_B} P_{el,TE}(t)\cdot dt\right] = 0$$

In möglicher Detailgestaltung ist es vorgesehen, dass unterhalb der vorbestimmten Kühlmitteltemperatur TKE zumindest zeitweise eine zusätzliche Aufheizung des Kühlkreises durch das Heizglied erfolgt. Eine solche beschleunigte Aufheizung des Kühlkreislaufs vor einer Wärmeentnahme ist besonders dann sinnvoll, wenn der Erwartungswert einer langen Betriebsdauer vorliegt.

Bei einer möglichen Ausführungsform ist es alternativ oder ergänzend vorgesehen, dass unterhalb der vorbestimmten Kühlmitteltemperatur TKE zumindest zeitweise eine zusätzliche Aufheizung des Kühlkreises durch das als Peltier-Element ausgebildete Wärmepumpenglied erfolgt. Dies entspricht einem Betrieb des Peltier-Elements mit einem ausreichend großen Strom in einem Bereich mit COP<1, so dass im Ergebnis ein Wärmeeintrag in den Kühlkreislauf erfolgt.

Die Ermittlung des Erwartungswertes kann bevorzugt durch einen oder mehrere der folgenden Schritte erfolgen:

- Ermitteln des Erwartungswertes aus statistischen Daten eines Nutzungsverhaltens für das Fahrzeug in der Vergangenheit;
- Auslesen einer Eingabe einer Bedienperson über die anstehende Nutzung;
- Verwendung von Daten einer Navigationseinrichtung, insbesondere eines aktuell verwendeten Routenplans.

Insbesondere kann dabei die zweite Möglichkeit ergänzend zu der ersten vorliegen, damit im Einzelfall eine Überstimmung eines ansonsten selbstständigen, insbesondere lernfähigen Systems erfolgen kann.

Allgemein vorteilhaft umfasst ein erfindungsgemäßes Betriebsverfahren den Schritt des Maximierens eines Wärmetransports von dem Kühlkreislauf auf den Luftstrom mittels des Wärmepumpenglieds, in bevorzugter Detailgestaltung durch Maximierung der Temperaturdifferenz TK-TWC. Hierdurch wird allgemein der Anteil der zum Heizen verwendeten Energiemenge maximal aus der Verlustwärme und gegebenenfalls anderen, den Kühlkreislauf heizenden Wärmequellen entnommen und minimal aus der für den Fahrzeugantrieb notwendigen Energie des elektrischen Energiespeichers. Durch Maximierung der Temperaturdifferenz TK-TWC kann zumindest zeitweise eine größte mögliche Heizleistung aus der Wärme des Kühlkreislaufs entnommen werden, so dass die aus dem Energiespeicher zu Heizzwecken entnommene elektrische Leistung relativ zu der gesamten Heizleistung minimal wird. Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.

Fig. 1    zeigt ein erstes Beispiel eines Heizsystems welches mit dem erfindungsgemäßen Verfahren betrieben werden kann.

Fig. 2    zeigt ein zweites Beispiel eines Heizsystems welches mit dem erfindungsgemäßen Verfahren betrieben werden kann.

Fig. 3    zeigt ein Diagramm des Verlaufs einer Kühlmitteltemperatur für verschiedene Betriebsdauern.

Fig. 4    zeigt die Ergebnisse von Simulationen zur Optimierung eines elektrischen Energieverbrauchs für verschiedene Betriebsdauern.

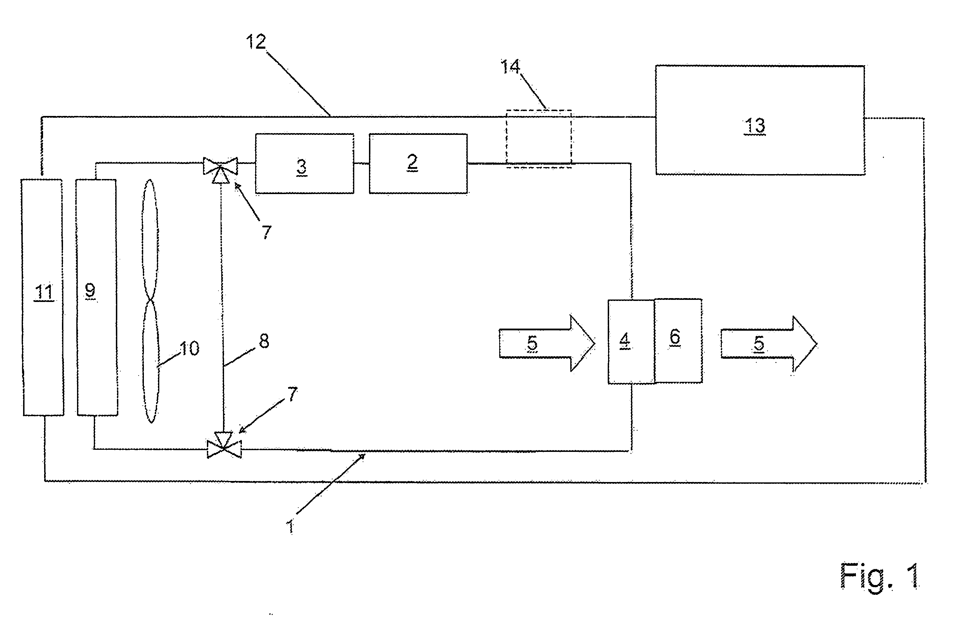

Das in Fig. 1 gezeigte Heizsystem für ein Elektrofahrzeug umfasst einen Kühlkreislauf 1, in dem ein Kühlmittel, zum Beispiel ein Wasser-Glykol-Gemisch, umgewälzt wird. Es transportiert Abwärme von Antriebskomponenten, vorliegend einem Elektromotor 2 eines Fahrzeugantriebs sowie von einer zu dessen Regelung vorgesehener Leistungselektronik 3 zu einem Wärmepumpenglied 4, das als Peltier-Element ausgebildet ist.

Das Peltier-Element 4 ist mit seiner einen Seite thermisch an das Kühlmittel angebunden und mit seiner anderen Seite an einen zu heizenden Luftstrom 5, der einem Passagierbereich des Fahrzeugs zugeführt wird.

Weiterhin ist ein Heizglied in Form eines PTC-Heizelements 6 zur Erwärmung des Luftstroms 5 vorgesehen. Das PTC-Heizelement 6 und das Peltier-Element 4 sind als integrierte Baueinheit ausgebildet.

An dem Kühlkreislauf 1 ist eine ansteuerbare Ventilanordnung 7 vorgesehen, mittels dessen der Kühlmittelstrom entweder durch einen Bypass 8 oder ganz oder teilweise durch einen mit Außenluft umströmbaren Kühlmittelkühler 9 geleitet werden kann. An dem Kühler 9 ist zudem ein Lüfter 10 vorgesehen.

Ein weiterer Kühler 11 eines weiteren Kühlkreises 12 ist vor dem Kühler 9 angeordnet. Der weitere Kühlkreislauf 12 dient vorliegend ausschließlich der Kühlung eines elektrischen Energiespeichers in Form einer Lithium-Ionen-Batterie 13, wobei das Temperaturniveau in dem Batterie-Kühlkreislauf 12 im Regelbetrieb niedriger ist als in dem Kühlkreislauf 1 der Antriebskomponenten 2, 3. Mittels eines optionalen Wärmepumpenglieds 14, das ebenfalls als Peltier-Element ausgebildet ist, kann Wärme von dem meist kälteren Kühlkreislauf 12 in den meist wärmeren Kühlkreislauf 1 gepumpt werden.

Für die vorliegende Problematik einer Optimierung der Fahrzeugheizung unter möglichst geringem Gesamtverbrauch aus der Energiequelle 13 versteht sich, dass die Ventilanordnung, soweit nicht ausdrücklich anders erwähnt, das Kühlmittel unter Umgehung des äußeren Kühlers 9 durch den Bypass 8 leitet. Zudem ist der Kühlkreislauf 1 durch entsprechende Maßnahmen ausreichend isoliert, so dass möglichst keine Verlustwärme nach außen abgegeben wird.

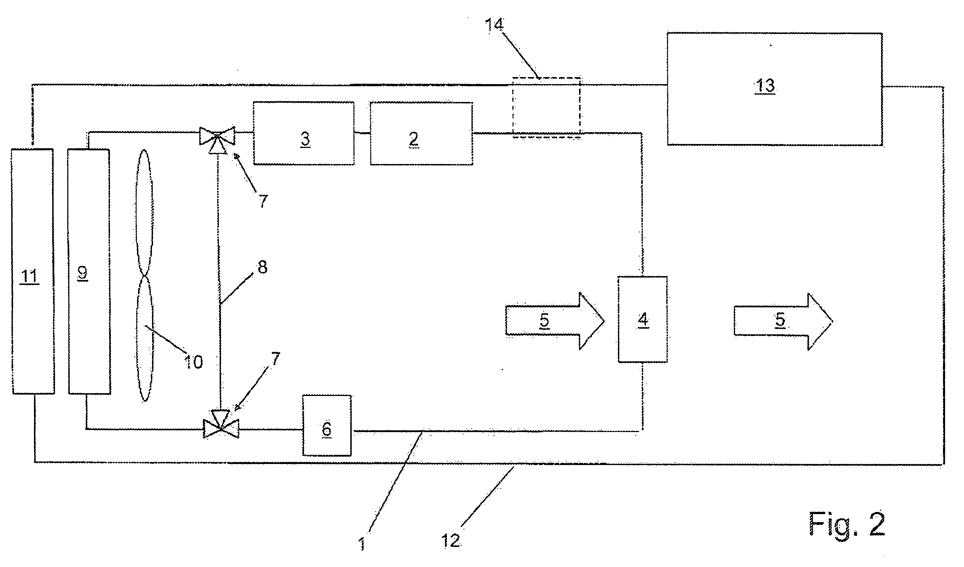

Bei dem zweiten Beispiel eines Heizsystems gemäß Fig. 2 ist als einziger Unterschied zu dem ersten Beispiel das PTC-Heizelement bzw. Heizglied 6 nicht unmittelbar in dem Luftstrom 5 angeordnet, sondern in dem Kühlkreislauf 1. Es steht daher thermisch mit dem Kühlmittel in Verbindung und eine Aufheizung des Luftstroms 5 durch das Heizelement 6 erfolgt im Gegensatz zum ersten Beispiel nur mittelbar über eine Heizung des Kühlmittels.

Bei einem weiteren, nicht dargestellten Beispiel kann es vorgesehen sein, dass sowohl im Luftstrom 5 als auch im Kühlkreislauf 6 PTC-Heizelelemente vorgesehen sind.

Ein erfindungsgemäßes Betriebsverfahren für die Heizsysteme nach Fig. 1 und Fig. 2 funktioniert nun wie folgt:

Die Temperatur des Kühlkreislaufs TK, die Temperatur der kalten, mit dem Kühlkreislauf in Verbindung stehenden Seite des Peltier-Elements TWC und die Temperatur der warmen, mit dem Luftstrom 5 in Verbindung stehenden Seite des Peltier-Elements TL werden gemessen und überwacht. Der Wärmetransport von dem Kühlkreislauf 1 an die Luft 5 durch das Peltier-Element 4 wird optimiert, so dass zumindest über die Gesamtdauer eines Betriebszyklus des Fahrzeugs eine möglichst minimale Verwendung von elektrischer Energie des Energiespeichers 13 für die Heizung des Fahrgastraums erfolgt.

Dabei können verschiedene besondere Betriebssituationen unterschieden und in der Steuerung berücksichtigt werden:

a) Einfaches System ohne Vorkonditionierung:

Um den COP der gesamten Heizung zu optimieren, muss ein möglichst großer Anteil der zum Heizen benötigten Wärmemenge dem Kühlkreis entzogen werden, d.h. das treibende Temperaturgefälle $\Delta T = TWC\text{-}TK$ als Maß für den Wärmeübergang muss maximiert werden, vorzugsweise durch Hochfahren der Stromzufuhr an den Peltierelementen 4 (und entsprechend dem Heizprofil evtl. Reduzierung der Stromzufuhr an den PTC-Heizelementen 6), bis eine der folgenden Bedingungen erfüllt ist:

(1) Der Kühlkreislauf 1 erwärmt sich nicht mehr, d.h. die abgeführte Wärme entspricht bereits der Summe der dem Kreislauf 1 zugeführten Abwärmen. Man vermeidet, den Kreislauf zu kühlen. Erkennungsmerkmal: d(TK)/dt=0.

(2) Die maximale Leistung der Peltier-Elemente 4 in Bezug auf den Kühlkreislauf wird erreicht. Die dem Kreislauf entzogene Wärme wächst nicht mehr bei weiter steigender Stromzufuhr. Erkennungsmerkmal: $\Delta T = TWC - TK$ stagniert bei ansteigender Stromzufuhr, d.h. es gilt: d($\Delta T$)/dt=0.

(3) Eventuelle weitere begrenzende Bedingungen, die nicht der primären Physik der Thermoelektrik und des Heizsystems, sondern sekundären Anforderungen geschuldet sind, zum Beispiel Vermeidung von Überhitzung, vorübergehende Schonung der Stromquelle aus anderen Anforderungen etc.

In der Praxis wird meist die Bedingung (1) zuerst eintreten und die bevorzugte Lösung darstellen. Bedingung (2) könnte zu einer unerwünscht starken Abkühlung des Kühlkreislaufs führen. Es ist denkbar, Bedingung (2) unter der zusätzlichen Bedingung zu verwenden, dass die Temperatur des Kühlkreislaufs TK die Außentemperatur bzw. einen definierten Abstand zur Außentemperatur nicht unterschreitet.

Kann eine Zieltemperatur des Luftstroms 5 gemäß der oben genannten Vorgehensweise nicht erreicht werden, so muss über das PTC-Heizelement 6 zusätzlich geheizt werden, bis die Zieltemperatur erreicht wird.

Vorzugsweise wird zur Maximierung des gesamten COP des Heizsystems die Luftaustrittstemperatur so niedrig wie aus ergonomischen Gründen zumutbar eingestellt.

Da sich die Temperaturen und Strömungsgeschwindigkeiten im Kühlkreislauf 1 durch äußere Einflüsse oder gewünschte Eingriffe während des Betriebes verändern können, muss in gewissen Zeitintervallen geprüft werden, ob noch das Optimum gemäß vorgenannter Kriterien vorliegt und bei Bedarf entsprechend gegengesteuert werden.

b) System mit thermischer Vorkonditionierung:

Es ist ergänzend möglich und vorteilhaft, den Passagierbereich, aber auch den Kühlkreislauf 1 und seine Wärmequellen 2, 3 sowie den Energiespeicher 13 vor dem Bewegen des Fahrzeugs thermisch vorzukonditionieren. Vorzugsweise geschieht dies, während das Fahrzeug am Stromnetz angeschlossen ist, damit der Ladezu-stand des Energiespeichers 13 auf hohem Niveau gehalten werden kann. Nach dem Start des Fahrzeugs müssen der Kühlkreislauf 1 und die thermisch angebundenen Wärmekapazitäten 2, 3 nicht erst durch Verlustwärmeströme erwärmt werden, sondern können aufgrund ihrer hohen Temperaturniveaus sofort einen hohen COP des Heizsys-tems bewirken. Es kann unmittelbar ein Gleichgewicht zwischen Wärmequellen und Wärmesenken eingestellt werden, so dass die Kreislauftemperatur TK weitgehend konstant bleibt.

Gegebenenfalls kann es, zumindest bei kürzeren Fahrzeiten, vorgesehen sein, einen Abfall der Kreislauftemperatur TK auch deutlich unter das Gleichgewicht zu akzeptieren, da aufgrund der Vorkonditionierung ein hohes Ausgangsniveau der Kreislauftemperatur vorliegt.

c) System mit Regelstrategie der Kreislauftemperatur bei Kenntnis der Betriebsdauer:

Insbesondere falls eine Vorkonditionierung gemäß b) nicht möglich war oder nicht vorgesehen ist, hängt die optimale Heizstrategie wesentlich von der zu erwartenden Betriebsdauer des Fahrzeugs ab. Ein Erwartungswert tBE für die Betriebsdauer zu Beginn einer Fahrt kann durch eine manuelle Eingabe der Bedienperson erhalten werden oder auch durch eine Prognose aufgrund eines statistisch ermittelten, typischen Nutzerverhaltens. Insbesondere kann die Steuerung des Heizsystems als lernfähiges System ausgestaltet sein, das eine ständige Optimierung der Bereitstellung von Erwartungswerten tBE einer Betriebsdauer bzw. Fahrzeitdauer vornimmt. Insbesondere kann ein solcher Betrieb als Standardeinstellung vorliegen, wobei zusätzlich ein "Override" durch manuelle Eingabe eines Erwartungswertes tBE im Einzelfall vorgesehen ist.

Die Abhängigkeit der optimalen Regelstrategie von der Betriebsdauer tBE wird zunächst anhand zweier Extremfälle dargestellt:

Grenzfall 1:

Die Betriebsdauer ist nur sehr kurz. In diesem Fall wäre eine gezielte Einflussnahme auf den Kühlkreislauf 1 aufgrund der Trägheit der thermischen Massen nicht sinnvoll. Insbesondere ergeben sich dann folgende sinnvolle Möglichkeiten in Abhängigkeit weiterer Umstände:

- Bei ausreichend hohen Umgebungstemperaturen, bei denen zumindest keine Vereisung des Kühlmittelkühlers 9 erfolgt (z.B. > 0 °C), kann der Kühlkreislauf über den Kühler 9 geschaltet werden. Somit kann die Umgebungsluft zum Pumpen von Wärme genutzt werden.

- Bei sehr niedrigen Umgebungstemperaturen, zum Beispiel <= 0 °C, kann eine ausschließliche Beheizung mit luftseitigen PTC-Heizgliedern 6 (siehe Heizsystem gemäß Fig. 1) erfolgen. Vorteile ergeben sich vor allem aufgrund der schnellen Reaktionszeit ohne Trägheit thermischer Massen.

Grenzfall 2:

Die Betriebsdauer ist wesentlich größer als eine typische Aufheizdauer des Kühlkreislaufs. Dann ist es effektiv, den Kühlkreislauf 1 sich vor einer Wärmeentnahme zunächst bis zu einer oberen Grenztemperatur bzw. maximalen stationären Temperatur des Kühlkreislaufs aufheizen zu lassen. Dies kann durch eine aktive Zuheizung, z.B. mittels wasserseitigen Heizgliedern 6 gemäß Heizsystem nach Fig. 2., beschleunigt werden. Je nach Anforderungen kann auch ein Abwarten ausreichen, bis die Abwärmequellen 2, 3 den Kreislauf 1 erwärmt haben.

Zwischen diesen beiden Grenzfällen ist nun abhängig von den Bedingungen besonders der zu erwartenden, nicht wesentlich unterbrochenen Fahrzeit eine optimale stationäre Kreislauftemperatur TKE zu ermitteln.

Dabei erfolgt zunächst eine Aufheizung des Kühlmittelkreises möglichst ohne Wärmeentnahme bis zu der optimalen stationären Temperatur TKE (instationäre Phase), wonach die Temperatur TKE unter Pumpung durch das Wärmepumpenglied bzw. Peltier-Element 4 im Wesentlichen konstant gehalten wird (stationäre Phase).

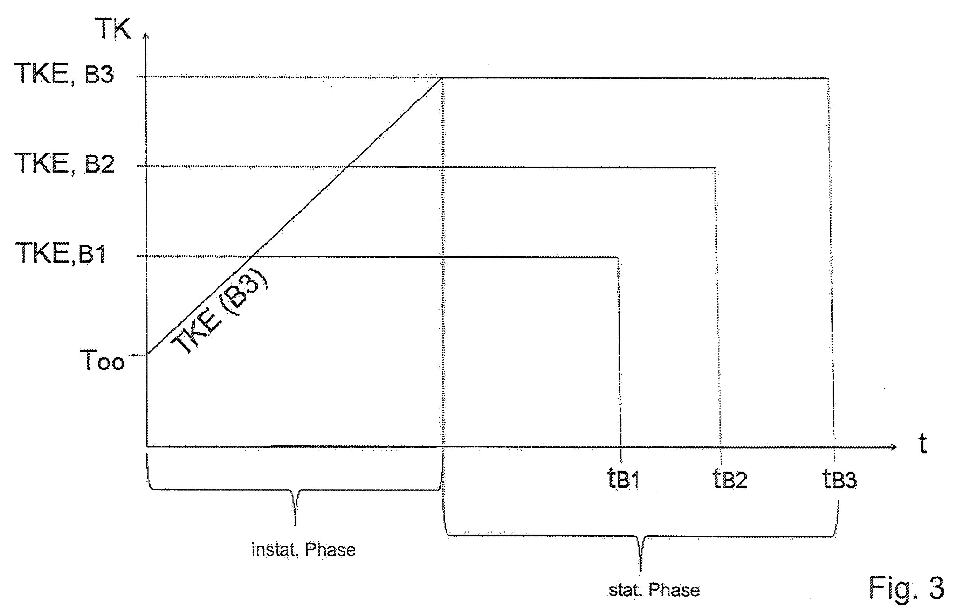

Fig. 3 zeigt zur Veranschaulichung ein Diagramm der Kühlkreislauftemperatur über der Zeit, beginnend vom Start des Fahrzeugs bei einer Temperatur Too. Eingetragen sind drei Paare von Betriebsdauern tB1, tB2, tB3 und jeweils dazugehörigen optimalen stationären Temperaturen TKE.

Für die Betriebsdauer tB3 ist zudem der Temperaturverlauf idealisiert dargestellt, nämlich zunächst ein linearer Anstieg von Too bis TKE, B3 (instationäre Phase) und nachfolgend ein konstanter Verlauf bei TKE, 83 (stationäre Phase).

Die aufgefundenen optimalen Temperaturen TKE gehorchen dabei jeweils der Beziehung:

$$\frac{d}{dTKE}\left[\int_{t=0}^{t_B} P_{el,PTC}(t)\cdot dt + \int_{t=0}^{t_B} P_{el,TE}(t)\cdot dt\right] = 0$$

Dabei ist $t_B$ die Betriebsdauer bzw, deren Erwartungswert, $P_{el,PTC}$ ist die zeitabhängige Leistung des Heizglieds (COP=1), und $P_{el,TE}$ ist die Leistung des Peltier-Elements (COP>=1).

In der stationären Phase gelten dann die gleichen Regeln wie oben unter a) "einfaches System ohne Vorkonditionierung"). Durch Lösung des vorstehenden Ansatzes, etwa analytisch, numerisch, kennfeldbasiert, lernfähiges System o.a. unter Einbeziehung der Bedingungen für die stationäre Phase kann die Zieltemperatur des Kreislaufs bestimmt werden.

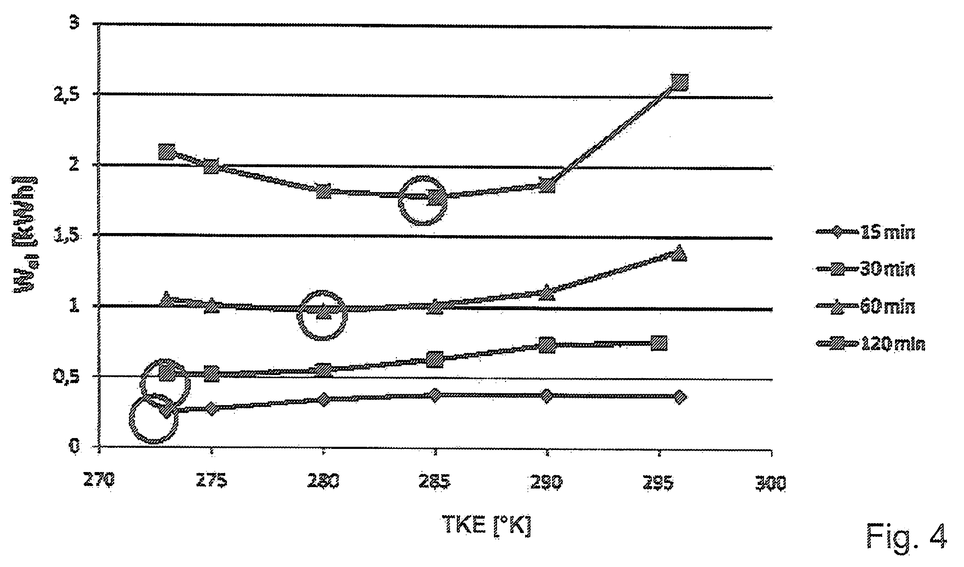

Beispielhaft sind in Fig. 4 Simulationsergebnisse für ein Heizsystem dargestellt, bei denen vier verschiedene erwartete Fahrzeiten tBE zwischen 15 Minuten und 120 Minuten zugrunde gelegt wurden. Es wurde eine Erwärmung des Kreislaufs 1 von Too auf die jeweilige stationäre Temperatur ohne aktive Zuheizung, also nur durch Abwärmeleistung der Antriebskomponenten 2, 3 zugrunde gelegt. Die weiteren Rahmendaten des modellierten Heizsystems sind:

Umgebungstemperatur 273 K; Ausblastemperatur des Luftstroms 5 im Passagierbereich: 313 K; Luftmassenstrom 135 kg/h; summierte Wärmekapazität von Kreislauf 1 und Wärmequellen 2, 3: 30 kJ/K; Abwärmeleistung der Wärmequellen 2, 3: 300 W.

In Fig. 4 dargestellt ist jeweils die verbrauchte Gesamtenergie über der (variierten) stationären Temperatur TKE. Es zeigt sich jeweils ein durch einen Kreis markiertes Minimum des Energieverbrauchs bei verschiedenen stationären Temperaturen in Abhängigkeit von der Fahrzeug tBE.

Die spezifischen Verfahrensmerkmale der vorstehend behandelten Fallunterscheidungen können in entsprechenden Situationen in beliebiger Kombination vorteilhaft sein. Beispielsweise kann zum einen eine Vorkonditionierung über Strom aus dem Netz vorgenommen werden und zudem, z.B. aufgrund geringer Abwärmeleistungen im Stoßverkehr, aktiv mittels wasserseitigen PTC-Heizern 6 zugeheizt werden, um ein Absinken der Temperatur des Kühlkreises unter das optimale Niveau zu verhindern.

Falls erwünscht, können der Kreislauf und dessen angebundene thermische Massen ergänzend zu oder anstelle von Abwärmen oder wasserseitigen PTC-Heizern 6 auch mittels der Peltier-Elemente 4 beheizt werden. Dies wird erreicht möglich, indem die Stromzufuhr nach Vorliegen der Bedingung (2) aus a) weiter erhöht wird und entsprechend die Peltier-Elemente mit einem COP < 1 betrieben werden.

**Patentansprüche**

1. Verfahren zum Betrieb eines Heizsystems umfassend die Schritte:

   a. Bestimmen einer luftseitigen Temperatur TL eines Wärmepumpenglleds (4), insbesondere eines in den Passagierbereich geführten Luftstroms (5);
   b. Bestimmen einer Temperatur TK des Kühlkreislaufs (1);
   c. Bestimmen einer Temperatur TWC einer mit dem Kühlkreislauf (1) in Kontakt stehenden Seite des als Peltier-Element ausgebildeten Wärmepumpenglieds (4), **gekennzeichnet durch** die Schritte:

      Bestimmen eines Erwartungswertes tBE für eine Nutzungsdauer des Fahrzeugs zu Beginn einer Nutzung, und
      Betrieb des als Peltier-Element ausgebildeten Wärmepumpenglleds (4) in Abhängigkeit vom Erreichen einer vorbestimmten Kühlkreistemperatur TKE, wobei TKE in Abhängigkeit von dem Erwartungswert der Nutzungsdauer tBE gewählt wird, und insbesondere monoton mit dem Erwartungswert tBE ansteigt.

2. Verfahren nach Anspruch 1, **gekennzeichnet, durch** den Schritt:

   Erhöhen oder Beibehalten einer Pumpleistung des Wärmepumpenglieds (4), falls eine zeitliche Änderung der Temperatur TK des Kühlkreislaufs (1) größer Null ist.

3. Verfahren nach Anspruch 1 oder 2, **gekennzeichnet, durch** den Schritt:

   Ermitteln einer Grenzleistung des als Peltier-Element ausgebildeten Wärmepumpenglieds (4) aus dem zeitlichen Verhalten der Temperaturdifferenz TWC-TK.

4. Verfahren nach einem der Ansprüche 1 bis 3, **gekennzeichnet durch** den Schritt:

   zusätzliches Heizen **durch** das Heizglied (6), falls die Zieltemperatur TL einen vorgegebenen Wert **durch** Schritt d. nicht erreicht.

5. Verfahren nach einem der Ansprüche 1 bis 4, **gekennzeichnet durch** den Schritt:

Aufheizen eines Wärmespeichers (1, 2, 3, 13), insbesondere eines Fahrzeuginnenraums, des Kühlkreises, des Energiespeichers und/oder der Antriebskomponente, während eines stationären Ladevorgangs des Energiespeichers (13).

**6.** Verfahren nach einem der Ansprüche 1 bis 5, **dadurch gekennzeichnet, dass** bis zum Erreichen von TKE eine instationäre Aufheizphase des Kühlkreislaufs (1) betrieben wird, wobei mit dem Erreichen von TKE eine im Wesentlichen stationäre Phase mit konstanter Kühlmitteltemperatur TK und entsprechender Wärmeentnahme durch das Wärmepumpenglied (4) erfolgt.

**7.** Verfahren nach einem der Ansprüche 1 bis 6, **dadurch gekennzeichnet, dass** unterhalb der vorbestimmten Kühlmitteltemperatur TKE zumindest zeitweise eine zusätzliche Aufheizung des Kühlkreises (1) durch das Heizglied (6) erfolgt.

**8.** Verfahren nach einem der Ansprüche 1 bis 7, **dadurch gekennzeichnet, dass** unterhalb der vorbestimmten Kühlmitteltemperatur TKE zumindest zeitweise eine zusätzliche Aufheizung des Kühlkreises (1) durch das als Peltier-Element ausgebildete Wärmepumpenglied (4) erfolgt.

**9.** Verfahren nach einem der Ansprüche 1 bis 8, **dadurch gekennzeichnet, dass** der Erwartungswert tBE für die Nutzungsdauer durch einen oder mehrere der folgenden Schritte bestimmt wird:

- Ermitteln des Erwartungswertes tBE aus statistischen Daten eines Nutzungsverhaltens für das Fahrzeug in der Vergangenheit;
- Auslesen einer Eingabe einer Bedienperson über die anstehende Nutzung;
- Verwendung von Daten einer Navigationseinrichtung, insbesondere eines aktuell verwendeten Routenplans.

**10.** Verfahren nach einem der Ansprüche 1 bis 9, gekennziechnet durch den Schritt:

Maximieren eines Wärmetransports von dem Kühlkreislauf (1) auf den Luftstrom (5) mittels des Wärmepumpenglieds (4), insbesondere durch Maximierung der Temperaturdifferenz TK-TWC.

## Claims

**1.** A method for operating a heating system comprising the following steps:

a. determining an air-side temperature TL of a heat pump member (4), in particular of an airflow (5) guided into the passenger area;
b. determining a temperature TK of the cooling circuit (1) ;
c. determining a temperature TWC of a side, in contact with the cooling circuit (1) , of the heat pump member (4) designed as a Peltier element, **characterised by** the following steps:

determining, at the start of use, an expected value tBE for a period of use of the vehicle, and
operating the heat pump member (4) designed as a Peltier element in accordance with the moment at which a predetermined cooling circuit temperature TKE is reached,
wherein TKE is selected in accordance with the expected value tBE of the period of use, and in particular increases monotonously with the expected value tBE.

**2.** The method according to claim 1, **characterised by** the following step:

increasing or maintaining a pumping output of the heat pump member (4) if a temporal change to the temperature TK of the cooling circuit (1) is greater than zero.

**3.** The method according to claim 1 or 2, **characterised by** the following step:

establishing a limit output of the heat pump member (4) designed as a Peltier element from the temporal behaviour of the temperature difference TMC-TK.

**4.** The method according to one of claims 1 to 3, **characterised by** the following step:

additional heating by the heating member (6) if the target temperature TL does not reach a predefined value by means of step d.

5. The method according to one of claims 1 to 4, **characterised by** the following step:

heating a heat store (1, 2, 3, 13), in particular a vehicle interior, the cooling circuit, the energy store and/or the derive component, during a steady charging process of the energy store (13).

6. The method according to one of claims 1 to 5, **characterised in that** a transient heating phase of the cooling circuit (1) is operated until TKE is reached, wherein, once TYKE is reached, a substantially steady phase follows with constant coolant temperature TK and corresponding heat removal by the heat pump member (4).

7. The method according to one of claims 1 to 6, **characterised in that**, below the predetermined coolant temperature TKE, the cooling circuit (1) is heated additionally by the heating member (6), at least temporarily.

8. The method according to one of claims 1 to 7, **characterised in that**, below the predetermined coolant temperature TKE, the cooling circuit (1) is heated additionally by the heat pump member (4) designed as a Peltier element, at least temporarily.

9. The method according to one of claims 1 to 8, **characterised in that** the expected value tBE for the period of use is determined by one or more of the following steps:

- establishing the expected value tBE from statistical data concerning past usage patterns for the vehicle;
- reading out an input of an operator concerning the upcoming use;
- using data of a navigation device, in particular of a route plane currently used.

10. The method according to one of claims 1 to 9, **characterised by** the following step:

- maximising a transport of heat from the cooling circuit (1) to the airflow (5) by means of the heat pump member (4), in particular by maximising the temperature difference TK-TWC.

**Revendications**

1. Procédé de fonctionnement d'un système de chauffage comprenant les étapes consistant :

a. à déterminer une température TL, côté entrée d'air, d'un élément de pompe à chaleur (4), en particulier d'un flux d'air (5) guidé dans la zone des passagers ;
b. à déterminer une température TK du circuit de refroidissement (1) ;
c. à déterminer une température TWC d'un côté de l'élément de pompe à chaleur (4) configuré comme un élément à effet Peltier, ledit côté étant en contact avec le circuit de refroidissement (1),

**caractérisé par** les étapes consistant :

à déterminer, au début d'une utilisation, une valeur escomptée tBE pour une durée d'utilisation du véhicule, et à faire fonctionner l'élément de pompe à chaleur (4) configuré comme un élément à effet Peltier, en fonction du fait d'atteindre une température de circuit de refroidissement TKE prédéterminée, où la température TKE est choisie en fonction de la valeur escomptée tBE de la durée d'utilisation, et, en particulier, augmente avec la valeur escomptée tBE, de façon régulière.

2. Procédé selon la revendication 1, **caractérisé par** l'étape consistant :

à augmenter ou à maintenir une puissance de pompe de l'élément de pompe à chaleur (4), au cas où une modification dans le temps de la température TK du circuit de refroidissement, (1) est supérieure à zéro.

3. Procédé selon la revendications 1 ou 2, **caractérisé par** l'étape consistant :

à déterminer une puissance limite de l'élément de pompe à chaleur (4) configuré conne un élément à effet Peltier, à partir du comportement dans le temps de la différence de température entre TWC et TK.

4. Procédé selon l'une quelconque des revendications 1 à 3, **caractérisé par** l'étape :

   d'un chauffage supplémentaire par l'élément chauffant (6), au cas où la température ciblée TL n'atteint pas, par l'étape d., une valeur prédéterminée.

5. Procédé selon l'une quelconque des revendications 1 à 4, **caractérisé par** l'étape :

   de chauffage d'un accumulateur de chaleur (1, 2, 3, 13), en particulier de l'habitacle d'un véhicule, du circuit de refroidissement, de l'accumulateur d'énergie et/ou des composants d'entraînement, au cours d'un processus de charge stationnaire de l'accumulateur d'énergie (13).

6. Procédé selon l'une quelconque des revendications 1 à 5, **caractérisé en ce qu'**une phase de chauffage transitoire du circuit de refroidissement (1) est actionnée jusqu'à ce que la température TKE soit atteinte, où, en atteignant la température TKE, 11 se produit essentiellement une phase stationnaire à température TK constante du liquide de refroidissement et avec un prélèvement de chaleur correspondent par l'élément de pompe à chaleur (4).

7. Procédé selon l'une quelconque des revendications 1 à 6, **caractérisé en ce que**, au-dessous de la température TKE prédéterminée du liquide de refroidissement, un chauffage supplémentaire du circuit de refroidissement (1), par l'élément chauffant (6), se produit au moins par intermittence.

8. Procédé selon l'une quelconque des revendications 1 à 7, **caractérisé en ce que**, au-dessous de la température TKE prédéterminée du liquide de refroidissement, un chauffage supplémentaire du circuit de refroidissement (1), par l'élément de pompe à chaleur (4) configuré comme un élément à effet Peltier, se produit au moins par intermittence.

9. Procédé selon l'une quelconque des revendications 1 à 8, **caractérisé en ce que** la valeur escomptée tBE, pour la durée d'utilisation, est déterminée par une ou plusieurs étapes suivantes consistait :

   - à déterminer la valeur escomptée tBE à partir de données statistiques d'un comportement d'utilisation pour le véhicule, observé dans le passé ;
   - à sélectionner une entrée d'un utilisateur concernant l'utilisation en attente ;
   - à utiliser des données d'un dispositif de navigation, en particulier d'un plan d'itinéraire utilisé au moment considéré.

10. Procédé selon l'une quelconque des revendications 1 à 9, **caractérisé par** l'étape consistant :

   - à maximiser une transport de chaleur depuis le circuit de refroidissement (1) jusqu'au flux d'air (5), au moyen de l'élément de pompe à chaleur (4), en particulier par maximisation de la différence de température entre TK et TWC.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 19850829 C1